# EUROPÄISCHE PATENTANMELDUNG

(11) **EP 1 037 132 A2**
(43) Veröffentlichungstag der Anmeldung: **20.09.2000**
(21) Anmeldenummer: 00105554.0
(22) Anmeldetag: 16.03.2000
(51) Int. Cl.: G06F 1/16

(54) **Tragbare Präsentationsvorrichtung**

(30) Priorität: 16.03.1999 DE 19911747; 16.04.1999 DE 19917298
(71) Anmelder: Dietz, Michael, 82431 Kochel am See (DE)
(72) Erfinder: Dietz, Michael, 82431 Kochel am See (DE); Pröpster, Günter, 82431 Kochel am See (DE)
(74) Vertreter: Hemmerling, Marion

(57) **Zusammenfassung**

Die Erfindung bezieht sich auf eine tragbare Präsentationsvorrichtung unter Verwendung eines tragbaren Computers oder Labtop-Computers, die vorwiegend für den Einsatz im Außendienst konzipiert ist. Dabei weißt die Präsentationsvorrichtung zwei Anzeigeeinrichtungen (1, 2) auf, die so angeordnet sind, daß für zwei sich beispielsweise gegenübersitzende Personen jeweils der Blick auf zumindest eine dieser Anzeigeeinrichtungen möglich ist. Zur Verbesserung der Handhabbarkeit wird vorgeschlagen, die zweite Anzeigeeinrichtung (2) mittels einer speziellen Befestigungseinrichtung (3;11;21,22) an einer der anderen Einrichtungen (1; 10) der Präsentationsvorrichtung so zu lagern, daß sie in seitlicher und/oder vertikaler Richtung verstellbar und/oder um eine in Benutzungsstellung senkrechte Achse drehbar ist.

## Beschreibung

Die Erfindung bezieht sich auf eine Präsentationsvorrichtung mit den oberbegrifflichen Merkmalen des Patentanspruchs 1, insbesondere auf eine Präsentationsvorrichtung unter Verwendung eines tragbaren Computers oder Labtop-Computers, die vorwiegend für den Einsatz im Außendienst konzipiert ist.

Bekannte tragbare Computer oder Labtop-Computer weisen ein mit einer Tastatur versehenes Gehäuseteil auf, an dem eine aus einer geschlossenen Transportstellung in eine sichtbare Benutzerstellung schwenkbare Anzeigeeinheit befestigt ist. Bei der Kundenberatung mit dem tragbaren Computer werden auf dieser Anzeigeeinheit beratungsrelevante Daten und Informationen in Form von Texten oder Grafiken dargestellt. Für einen interessierten Beobachter, wie zum Beispiel einen Kunden, ist die Sichtbarkeit des Displays nur eingeschränkt oder bei gegenüberliegender Sitzposition ganz ausgeschlossen. Bei der Kundenberatung durch Banken, Versicherungen oder ähnliches werden zur Präsentation des jeweils zu verkaufenden Produktes Präsentationsmittel eingesetzt. Mittels der heute zur Verfügung stehenden Multimediatechniken können die erläuterungsbedürftigen Produkte auf den Anzeigeeinrichtungen tragbarer Computer besser oder unterstützend erläutert werden.

Bei Beratungsgesprächen sind die Räumlichkeiten für professionelle Präsentationsmittel, beispielsweise Beamer oder Overhead-Projektoren, oftmals nicht gegeben. Das Aufstellen derartiger Hilfsmittel oder von Projektionswänden ist oftmals vom Kunden nicht gewünscht. Eine Präsentationsvorrichtung, die eine Kundenberatung ermöglicht, in der sich der Kunde und der Verkäufer während der Präsentation so gegenüber sitzen, daß eine für die Verkaufsrhetorik wichtige Kommunikation auf der non-verbalen Ebene beschränkt möglich ist, ist aus der DE 94 06 985 U1 bekannt. Die darin beschriebene Präsentationsvorrichtung besteht aus einem tragbaren Computer mit einer üblichen aufklappbaren Benutzeranzeigeeinheit, wobei an das obere Ende der Benutzeranzeigeeinheit eine zweite Anzeigeeinheit angebracht ist, die parallel zur Schwenkachse der Benutzeranzeigeeinheit angelenkt ist.

Nachteilhaft ist bei einem solchen Aufbau unter anderem, daß die zweite Anzeigeeinheit in der zusammengeklappten Transportstellung instabil gelagert ist. Zudem ist die Aufstellung der beiden Anzeigeeinheiten zueinander durch die direkte Anlenkungen an das Computergehäuse bzw. aneinander sehr beschränkt.

Die Aufgabe der Erfindung besteht darin, einen tragbaren Computer zu schaffen, der eine Benutzung mit verbessertem Benutzungskomfort für sich gegenüber oder seitlich zueinander befindliche Beobachter ermöglicht und der auch unter beengten räumlichen Bedingungen eine überzeugenden Präsentation ermöglicht.

Diese Aufgabe wird durch eine Präsentationsvorrichtung mit den Merkmalen des Patentanspruchs 1 gelöst.

Durch die variabel verstellbare mechanische Ankopplung der zweiten Anzeigeeinrichtung an die Präsentationsvorrichtung können die beiden Anzeigeeinrichtungen auf den jeweils auf sie blickenden Betrachter optimal eingestellt werden.

Vorteilhafte Ausgestaltungen sind Gegenstand von abhängigen Ansprüchen.

Falls die zweite Anzeigeeinrichtung in einer inaktiven und/oder Transportstellung vorteilhafterweise flächig an der ersten Anzeigeeinrichtung oder dem Gehäuse anliegt oder zwischen diesen oder in dem Gehäuse aufgenommen ist, nimmt sie zum Transport nur wenig Platz in Anspruch. Die tragbare Präsentationsvorrichtung ist dadurch nur unwesentlich dicker als ohne die zweite Anzeigeeinrichtung.

Falls die zweite Anzeigeeinrichtung mit ihrer Anzeigefläche in einer Inaktivierungsstellung oder Transportstellung flächig vor einer Wandung des Gehäuses oder der ersten Anzeigeeinrichtung angeordnet ist, ist die Anzeigefläche vor Beschädigungen bei einem Transport vorteilhafterweise geschützt angeordnet.

Falls die zweite Anzeigeeinrichtung für zumindest eine Betriebsstellung mechanisch und/oder elektrisch von der Befestigungseinrichtung lösbar ist, kann sie in einer besonders variablen Stellung gegenüber dem weiteren Beobachter angeordnet werden. Im Fall einer Übertragung der Bildsignale über eine Funkschnittstelle oder eine IR-Schnittstelle und einer eigenständigen Stromversorgung der zweiten Anzeigeeinrichtung kann dieser in einer größeren Entfernung von der restlichen Präsentationsvorrichtung aufgestellt werden, als im Falle einer unlösbaren Ankopplung.

Eine Schienenführung zur Lagerung der zweiten Anzeigeeinrichtung bietet eine technisch einfache Lösung zur Verstauung der zweiten Anzeigeeinrichtung zum Transport.

Bei einer Ausführungsform mit der Befestigung der Schienenführung an der ersten Anzeigeeinrichtung kann die zweite Anzeigeeinrichtung in der Schienenführung derart gelagert werden, daß sie in zumindest einer Stellung innerhalb der Schienenführung um ihre entsprechende Lagerachse herum verschwenkbar ist. Insbesondere ist auch eine gegenüber der ersten Anzeigeeinrichtung höhenunabhängige Aufrichtung der zweiten Anzeigeeinrichtung möglich.

Eine Schienenführung am Gehäuse, insbesondere an dessen Unterseite, ermöglicht eine technisch besonders einfache Aufnahmemöglichkeit für die zweite Anzeigeeinrichtung.

Besondere Vorteile ergeben sich aus der Anlenkung der zweiten Anzeigeeinrichtung an einer einzelnen Schiene, einem Teleskoparm oder einem starren Arm, da die zweite Anzeigeeinrichtung von dem Hauptgehäuse des Computers beabstandet in eine ideale Stellung vor den zusätzlichen Betrachter gebracht werden kann. Eine entsprechende Lagerungen mit Verstellmöglichkeiten um horizontale und/oder vertikale Schwenkachsen ermöglicht dabei eine Optimierung der Stellung der zweiten Anzeigeeinrichtung gegenüber dem Betrachter.

Diese Ausführungsform bietet somit die Möglichkeit, die zweite Anzeigeeinrichtung beziehungsweise Beobachter-Anzeigeeinrichtung räumlich unabhängig von der ersten Anzeigeeinrichtung beziehungsweise Benutzer-Anzeigeeinrichtung zu positionieren. Dies ist wichtig, da sich die Gesprächspartner oftmals nicht gegenüber sitzen sondern unter einem gewissen Winkel zu einander. Mit dieser Ausführungsform kann auch verhindert werden, daß die Präsentationseinheit zwischen den beiden Gesprächspartnern als eine psychologische Barriere wirkt. Durch das Drehen der Benutzer-Anzeigeeinrichtung um die Hochachse kann die Präsentationsvorrichtung aus der non-verbalen Kommunikationslinie zweier Gesprächspartner vorteilhafterweise herausgehalten werden.

Ausführungsbeispiele der Erfindung werden nachstehend anhand der Zeichnung näher erläutert. Es zeigen:
- Fig. 1:: ein erstes Ausführungsbeispiel mit einem tragbaren Computer mit zwei Anzeigeeinheiten, bei dem die zweite Anzeigeeinheit in drei verschiedenen Stellungen dargestellt ist,
- Fig. 2:: einen tragbaren Computer mit zwei Anzeigeeinheiten und einem Schutzdeckel für die zweite Anzeigeeinheit,
- Fig. 3:: eine Ausführungsvariante der Präsentationsvorrichtung gemäß Fig. 1,
- Fig. 4 bis 9: ein zweites Ausführungsbeispiel einer tragbaren Präsentationsvorrichtung in verschiedenen Transport-, Aufbau- und Betrachtungsstellungen,
- Fig. 10 bis 15: ein drittes Ausführungsbeispiel der Präsentationsvorrichtung in verschiedenen Transport-, Aufbau- und Betrachtungsstellungen.

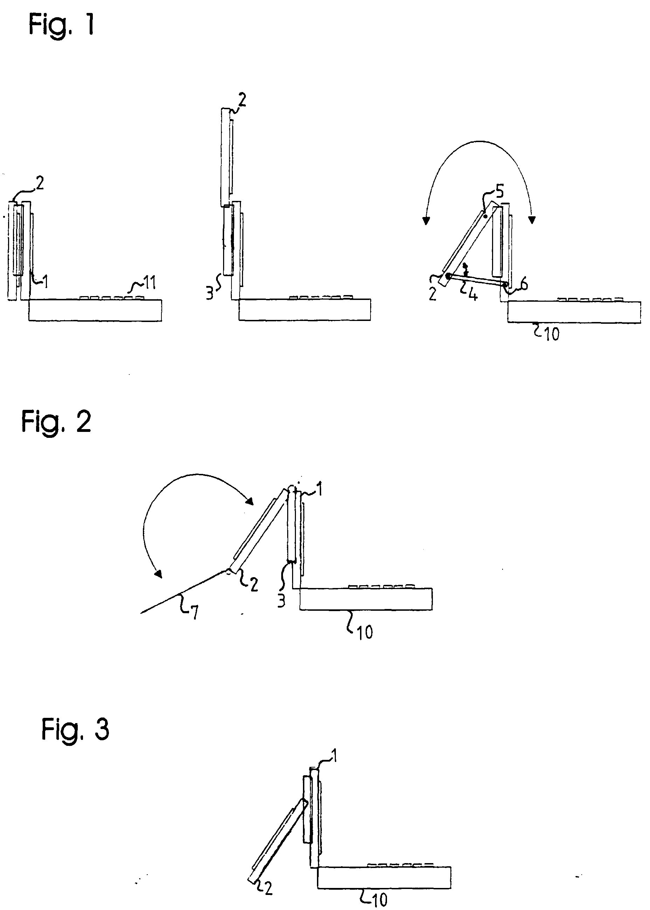

Wie aus Fig. 1 ersichtlich, besteht eine Präsentationsvorrichtung gemäß dem ersten Ausführungsbeispiel im wesentlichen aus einem tragbaren Computer mit einem Gehäuse 10, auf dessen Oberseite eine Tastatur 11 zur Bedienung der Computerkomponenten angeordnet ist. An diesem im wesentlichen normalen tragbaren Computer ist ein übliches Benutzer-Display beziehungsweise eine übliche Benutzer-Anzeigeeinheit 1 gelenkig im Bereich an der Rückseite der Tastaturseite des Computers angebracht.

Eine zweite Beobachter-Anzeigeeinheit 2 mit einer eigenen Bildschirmeinheit ist an der Rückseite der Benutzer-Anzeigeeinheit 1 über an der Seite der Benutzer-Anzeigeeinheit 1 angebrachte vertikale Schienen 3 nach oben verschiebbar und ist in der oberen Stellung zur Beobachterseite kippbar. Im zusammengeschobenen Zustand befindet sich die Bildschirmseite der Betrachter-Anzeigeeinheit 2 geschützt hinter der Rückseite der Benutzer-Anzeigeeinheit 1.

Bei einer alternativen Anordnung kann sich vorzugsweise bei Anordnung der Schienen an der Seite oder Vorderseite der Benutzer-Anzeigeeinheit 1 auch deren Bildschirmseite im zusammengeschobenen Zustand geschützt hinter der Rückseite der Beobachter-Anzeigeeinheit 2 befinden.

Zur Entlastung der Präsentationsvorrichtung und zur Entlastung der Anlenkung der Beobachter-Anzeigeeinheit 2 kann die Beobachter-Anzeigeeinheit 2 im aufgeklappten Zustand zusammen mit der Benutzer-Anzeigeeinheit 1 nach hinten und unten geschwenkt werden, um einen sicheren Stand zu gewährleisten.

Um die Beobachter-Anzeigeeinheit 2 in einer von der Benutzer-Anzeigeeinheit 1 abgeschwenkten Stellung arretieren zu können, kann an einer der Anzeigeeinheiten seitlich ein verschwenkbarer Arretierriegel 4 angebracht sein, der mit Bolzen 5 bzw. 6 in verschiedenen Stellungen in Eingriff bringbar ist.

Bei der in Fig. 2 dargestellten Ausführungsform ist die Beobachter-Anzeigeeinheit 2 mit einem Deckel 7 ausgestattet, der an einer ihrer Längsseiten angelenkt und über die Anzeigefläche verschwenkbar ist. Ein solcher Deckel 7 bietet beim Transport in der über die Anzeigefläche geschwenkten Stellung Schutz für diese. Besonders vorteilhaft ist die Verwendung eines transparenten oder leicht getönten und transparenten Deckels, der einerseits eine schützende Funktion für die Anzeigefläche und andererseits eine Filterwirkung bietet. Ein transparenter Deckel 7 oder eine entsprechend stabile Folie könnte zugleich auch verwendet werden, um über einem angezeigten Bild mit einem entsprechend geeigneten Stift auf dem Deckel 7 Notizen zu machen.

Bei der in Fig. 3 dargestellten Ausführungsform ist die Beobachter-Anzeigeeinheit 2 in der Führungsschiene derartig gelagert, daß sie auch in Zwischenstellungen aus der Ebene der Führungsschienen 3 herausschwenkbar ist. Dies erhöht die Variabilität der Aufstellpositionen und Neigungen für beide Anzeigeeinheiten 1 bzw. 2.

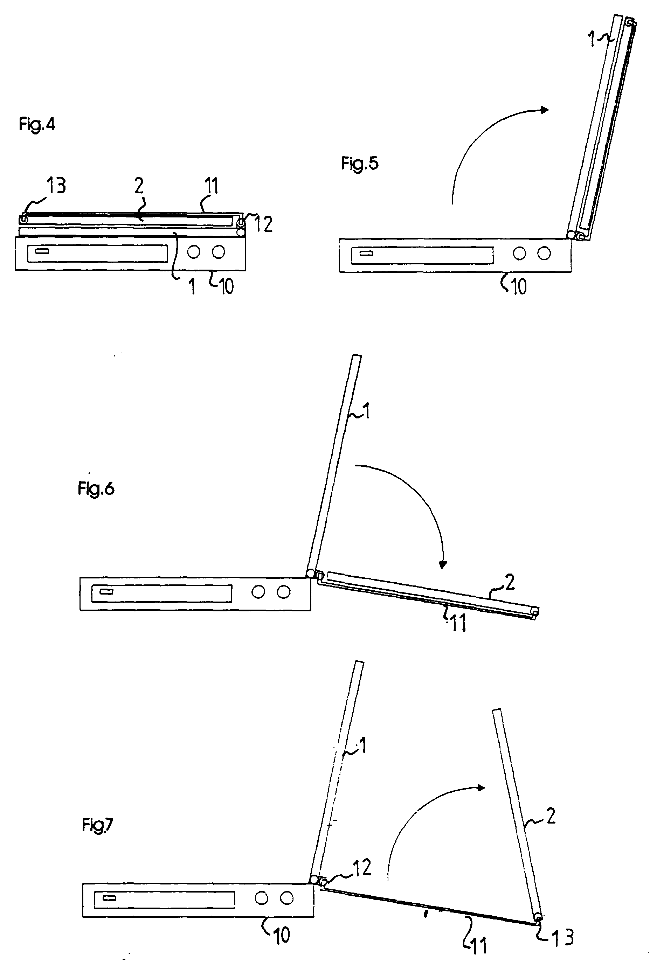

Bei dem zweiten Ausführungsbeispiel besteht die Präsentationsvorrichtung im wesentlichen aus einem handelsüblichen tragbaren Computer mit einem Gehäuse 10 und einer daran verschwenkbar gelagerten Benutzer-Anzeigeeinheit 1 sowie einer Beobachter-Anzeigeeinheit 2, wie dies aus den Fig. 4 bis 9 ersichtlich ist. Die Beobachter-Anzeigeeinheit 2 ist bei diesem Ausführungsbeispiel jedoch nicht schienengelagert sondern ist über einen Tragarm 11 an dem Gehäuse 10 oder der Benutzer-Anzeigeeinrichtung 1 gelagert. Bei der dargestellten Ausführungsform ist die Beobachter-Anzeigeeinheit 2 an der Rückseite der Benutzer-Anzeigeeinheit 1 über einen Tragarm 11 angelagert. Dabei ist der Tragarm 11 mit einem Gelenk 12 an der Rückseite der Benutzer-Anzeigeeinheit 1 angelenkt, sowie an seinen anderen Enden, hier Beobachter-Anzeigeeinheits-seitig, mit einem weiteren Gelenk 13 an vorzugsweise der Unterseite der Beobachter-Anzeigeeinheit 2 angelenkt.

Vorteilhafterweise sind die Bildschirmseiten der Anzeigeeinheiten 1 bzw. 2 im zusammengeklappten Zustand in Richtung zu der Oberseite des Gehäuses 10 hin gewandt, so daß sie beim Transport geschützt sind. Bei der in Fig. 4 dargestellten Anordnung ist die Länge des Tragarms 11 so bemessen, daß die Beobachter-Anzeigeeinheit 2 mit ihrer Rückseite ganz auf den Tragarm 4 schwenkbar ist. In dieser anlegten Stellung kann die Beobachter-Anzeigeeinheit 2 dann zusammen mit dem Tragarm 4 um den Lagerpunkt des Gelenks 12 herum auf die Rückseite der Betrachter-Anzeigeeinheit 1 geschwenkt werden, wodurch die Anzeigefläche der Beobachter-Anzeigeeinheit 2 auf der Rückseite der Benutzer-Anzeigeeinheit geschützt zu liegen kommt. Vorzugsweise ist die Anordnung in dieser zusammengeklappten Stellung verriegelbar.

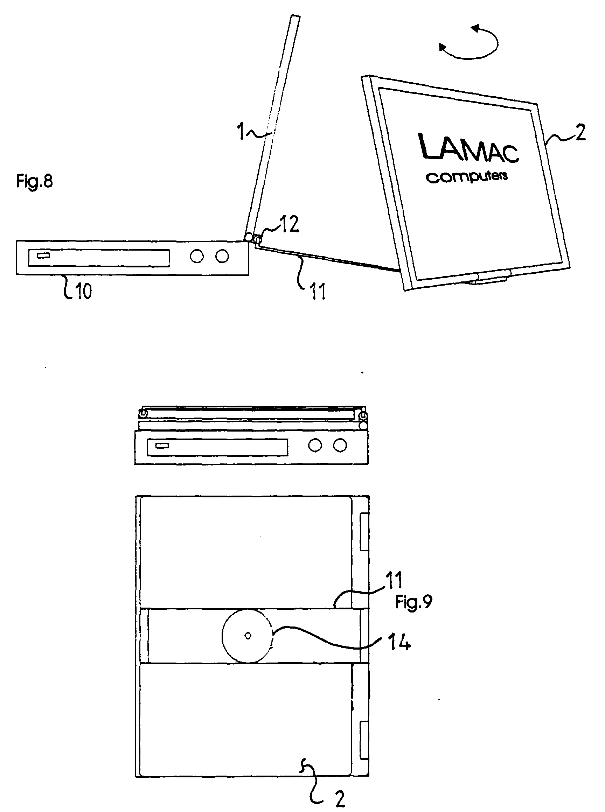

Das Ausklappen erfolgt, wie in den Fig. 4 bis 8 dargestellt, vorzugsweise durch Hochschwenken der Benutzer-Anzeigeeinheit 1 in einem ersten Schritt, daraufhin Dearretieren der Beobachter-Anzeigeeinheit 2 von der Benutzer-Anzeigeeinheit 1 und Wegschwenken der Beobachter-Anzeigeeinheit 2 zusammen mit dem Tragarm 11 von der Benutzer-Anzeigeeinheit 1 (Fig. 6). Daraufhin kann die Beobachter-Anzeigeeinheit 2 vom Tragarm 11 hochgeschwenkt werden, so daß sie in einer idealen Stellung gegenüber dem Beobachter angeordnet ist.

Eine besonders optimale Anordnung der Beobachter-Anzeigeeinheit 2 ist möglich, wenn das diese Einheit lagernde Gelenk 13 als Dreh/Kipp-Gelenk ausgeführt ist und/oder wenn ein weiteres Gelenk 14 in den Tragarm 4 eingebracht ist, wie dies aus der Draufsicht der Fig. 9 ersichtlich ist, so daß sich die Beobachter-Anzeigeeinheit 2 sowohl beliebig verdrehen als auch verkippen läßt. Dies ermöglicht es, unabhängig von der Lage der Präsentationsvorrichtung einen für den Beobachter optimalen Betrachtungswinkel einzustellen. Insbesondere kann durch das Verdrehen der Beobachter-Anzeigeeinheit 2 um die Hochachse des diese tragenden Gelenks 13 und/oder des Gelenks 14 im Tragarm 11 eine Anordnung der Präsentationsvorrichtung einstellen, bei der beide Anzeigeeinrichtungen 1 bzw. 2 den Betrachtern zugewandt aber zugleich beide Anzeigeeinrichtungen 1 bzw. 2 aus der direkten Kommunikationslinie zwischen den Betrachtern seitlich herausgestellt werden können.

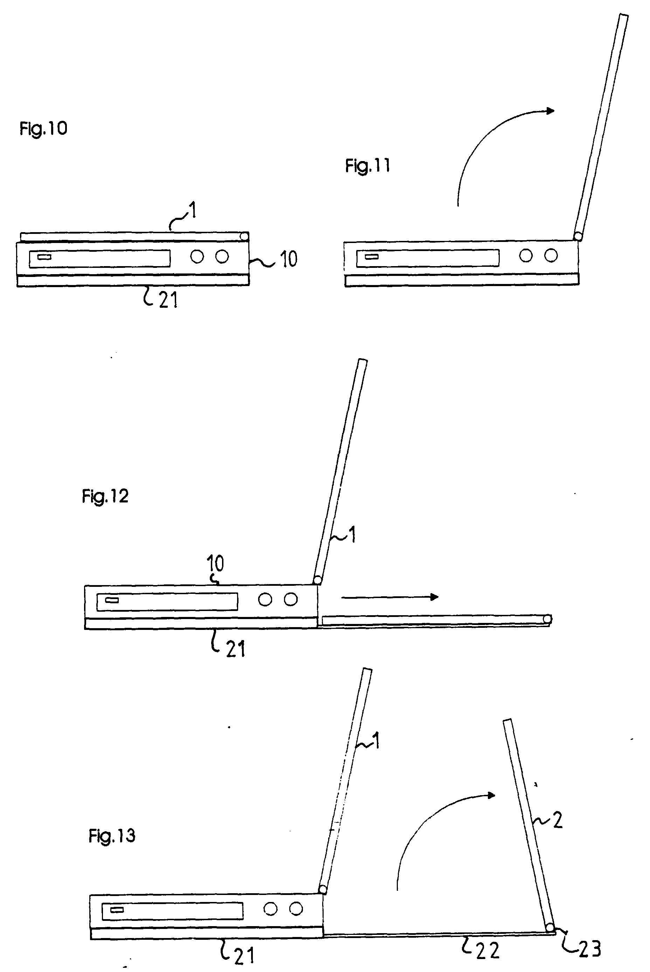

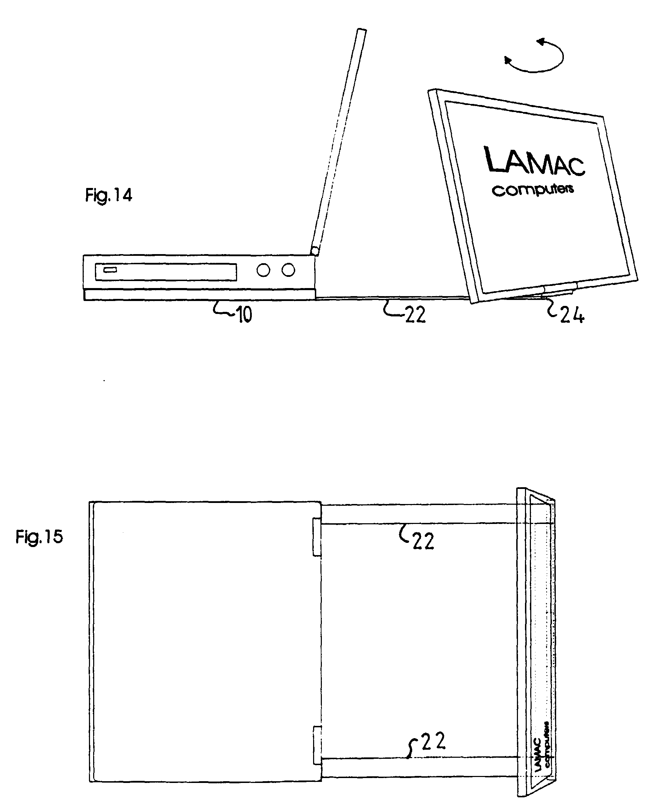

Gemäß dem dritten Ausführungsbeispiel weist die Präsentationsvorrichtung einen normalen tragbaren Computer auf, dessen Benutzer-Anzeigeeinheit 1 gelenkig an der Tastaturseite des Computers angebracht ist, wie dies aus den Figuren 10 bis 15 ersichtlich ist. Weiterhin weist die Präsentationsvorrichtung eine zweite Beobachter-Anzeigeeinheit 2 auf, die über zwei seitlich an dem Boden des Computers angebrachte Führungen 21 und darin laufende Schienen 22 nach hinten hin ausziehbar und von diesen Schienen 22 hochklappbar angebracht ist. Wird für die Lagerung der Beobachter-Anzeigeeinheit 2 anstelle eines einfachen Kippgelenks 23 ein einzelnes Dreh/Kipp-Gelenk 24 bei einer Lagerung der Beobachter-Anzeigeeinheit 2 auf nur einer einzigen Schiene 22 verwendet, wie dies in Fig. 14 dargestellt ist, so läßt sich die Beobachter-Anzeigeeinheit 2 zusätzlich um die entsprechende Hochachse drehen.

Im einzelnen zeigen die Figuren 10 - 13 die Präsentationsvorrichtung in der geschlossenen Transportstellung, mit aufgeklappter erster Benutzer-Anzeigeeinheit 1, mit herausgezogener zweiter Beobachter-Anzeigeeinheit 2 auf den herausgezogenen Schienen 22 und mit zumindest teilweise hochgeschwenkter Beobachter-Anzeigeeinheit 2. Bei dieser Anordnung befindet sich die Anzeigefläche der Beobachter-Anzeigeeinheit 2 in der zusammengeschobenen Stellung vorteilhafterweise unter der Unterseite des Gehäuses 10, so daß sie für den Transport geschützt gelagert ist. Fig. 15 zeigt eine Benutzungsanordnung, bei der die Benutzer-Anzeigeeinrichtung 1 zugeklappt ist und lediglich die Beobachter-Anzeigeeinrichtung aufgeklappt ist. Eine solche Anordnung bietet sich beispielsweise für Vorträge gegenüber einem Publikum an, wobei dann sinnvollerweise eine Fernsteuerung des Computers über z.B. eine Infrarot-Schnittstelle und eine Infrarot-Fernsteuerung erfolgen kann.

In einer Ausführungsvariante aller drei vorstehend aufgeführter Ausführungsbeispiele ist die zweite Beobachter-Anzeigeeinheit 2 vorteilhafterweise auch abnehmbar an der Präsentationsvorrichtung, insbesondere abnehmbar an der Rückseite der Benutzer-Anzeigeeinheit 1 angebracht und für die Benutzung über eine kabelgebundene oder kabellose (z.B. IR) Datenschnittstelle mit den restlichen Einheiten der Präsentationsvorrichtung verbunden, wobei der Bildschirm mittels einer geeigneten Standfußeinrichtung in eine für den Beobachter bequeme Betrachtungsposition gebracht wird. Für die kabellose Datenschnittstelle stehen neben Funkverbindung auch die Übertragung im infraroten Bereich zur Verfügung.

Für den Fall einer festen Verbindung der zweiten Beobachter-Anzeigeeinheit 2 mit dem Gehäuse 10 oder der ersten Benutzer-Anzeigeeinheit 1 kann die elektrische Verbindung der Beobachter-Anzeigeeinheit 2 zu deren Betrieb und Ansteuerung der Anzeigefläche auch über die Verbindungselemente oder über an den Verbindungselementen längs geführten Kabel- oder Leitereinrichtungen erfolgen.

Aufgrund der hohen Datenraten bei der Bildübertragung ist es nicht oder schlecht möglich, Videodaten mit der für PCs üblichen Wiederholfrequenz ohne zusätzlichen Aufwand über eine normale Infrarot-Schnittstelle zu übertragen. Zur Lösung dieses Problems kann eine Video- bzw. Bildkompressions-Hardware in dem Computer und den entsprechenden Schnittstelleneinheiten am Gehäuse 10 des Computers bzw. an der Beobachter-Anzeigeeinrichtung 2 bereitgestellt werden. Dabei werden die für die Beobachter-Anzeigeeinheit 2 bestimmten Bilddaten zunächst mit bekannten Komprimierverfahren, z.B. MPEG, komprimiert, per Infrarot an die Beobachter-Anzeigeeinheit 2 gesendet und danach in dieser bzw. deren Schnittstelleneinheit wieder dekomprimiert. Eine weitere Möglichkeit zur Datenübertragung stellt die bessere Ausnutzung der Infrarot-Bandbreite dar. Dabei senden oder empfangen mehrere IR-LED's auf unterschiedlichen Frequenzen und übertragen die Daten bitparallel. Eine weitere Möglichkeit besteht darin, eine oder mehrere parallel geschaltete IR-Sende-LED's mit einem breiteren Trägerspektrum anzuregen und die Daten ebenfalls parallel in mehreren Kanälen zu übertragen. Empfangsseitig werden die einzelnen Datenkanäle über Demodulation wiedergewonnen.

Weitere, in der Zeichnung nicht näher dargestellte Ausführungsbeispiele, ermöglichen insbesondere auch die Ankopplung einer oder mehrerer weiterer Bildschirmeinheiten für die Betrachtung durch weitere Beobachter, die seitlich zu zwei einander gegenübersitzenden Beobachtern sitzen.

Vorteilhafterweise kann bei allen Ausführungsformen die Möglichkeit bestehen, auf allen aktiven Bildschirmen bzw. Anzeigeeinheiten wahlweise identische oder unterschiedliche Bildschirminhalte darzustellen.

Alle Ausführungsvarianten könne weiter die Möglichkeit bieten, für die Beobachter-Anzeigeeinrichtung ein zusätzliches Zeigergerät, wie z.B. eine Maus oder einen Trackball, und/oder auch eine zusätzliche Tastatur anzuschließen. Dies gilt insbesondere auch für die Verwendung von berührungssensitiven Bildschirmen.

## Patentansprüche

1. Präsentationsvorrichtung mit
- einem Computer, der ein Gehäuse (10) und eine erste Anzeigeeinrichtung (1) aufweist, die mit dem Gehäuse (10) mechanisch und elektrisch verbunden ist, und - einer zweiten Anzeigeeinrichtung (2), die über eine Befestigungseinrichtung daran befestigt ist,
dadurch gekennzeichnet,
- daß die Befestigungseinrichtung (3;11;21,22) eine lose mechanische Ankopplungseinrichtung ist, die eine Verstellung der zweiten Anzeigeeinrichtung (2) gegenüber der ersten Anzeigeeinrichtung (1) in seitlicher Richtung, in Querrichtung, in Höhenrichtung und/oder um eine zumindest anteilig in zur Benutzungsstellung horizontal verlaufenden Achse gedreht ermöglicht.

2. Präsentationsvorrichtung nach Anspruch 1,
bei der die zweite Anzeigeeinrichtung (2) in einer inaktiven und/oder Transportstellung flächig an der ersten Anzeigeeinrichtung (1) oder dem Gehäuse (10) anliegt oder zwischen diesen oder in dem Gehäuse (10) aufgenommen ist.

3. Präsentationsvorrichtung nach Anspruch 1 oder 2,
bei der die zweite Anzeigeeinrichtung (2) mit ihrer Anzeigefläche in einer Inaktivierungsstellung oder Transportstellung flächig vor einer Wandung des Gehäuses (10) oder der ersten Anzeigeeinrichtung (1) angeordnet ist.

4. Präsentationsvorrichtung nach einem vorstehenden Anspruch,
bei der die zweite Anzeigeeinrichtung (2) für zumindest eine Betriebsstellung mechanisch und/oder elektrisch von der Befestigungseinrichtung (3;11;21,22) lösbar ist.

5. Präsentationsvorrichtung nach einem vorstehenden Anspruch,
bei der die Befestigungseinrichtung (3) eine Schienenführung zur Aufnahme der zweiten Anzeigeeinrichtung (2) aufweist.

6. Präsentationsvorrichtung nach Anspruch 5,
bei der die zweite Anzeigeeinrichtung (2) in der Schienenführung (3) derart gelagert ist, daß sie in zumindest einer Stellung innerhalb der Schienenführung (3) um ihre entsprechende Lagerachse herum verschwenkbar ist.

7. Präsentationsvorrichtung nach einem der Ansprüche 5 oder 6,
bei der die Schienenführung (3) an der ersten Anzeigeeinrichtung (1) angeordnet ist.

8. Präsentationsvorrichtung nach einem der Ansprüche 5 oder 6,
bei der die Schienenführung (21) am Gehäuse (10), insbesondere an der Unterseite des Gehäuses (10) angeordnet ist.

9. Präsentationsvorrichtung nach einem der Ansprüche 5 - 8,
bei der die zweite Anzeigeeinrichtung (2) an zumindest einer Schiene (22) gelagert ist, wobei die zumindest eine Schiene (22) in der Schienenführung (21) gelagert ist.

10. Präsentationsvorrichtung nach einem der Ansprüche 1 bis 4,
bei der die zweite Anzeigeeinrichtung (2) an zumindest einem Arm (11) gelagert ist, der wiederum am Gehäuse (10) oder der ersten Anzeigeeinrichtung (1) gelagert ist.

11. Präsentationsvorrichtung nach einem vorstehenden Anspruch,
bei der die Befestigungseinrichtung zumindest ein Dreh/Kippgelenk (12,13;14;23) zur Lageverstellung der zweiten Anzeigeeinrichtung (2) gegenüber der ersten Anzeigeeinrichtung (1) aufweist.

12. Präsentationsvorrichtung nach einem vorstehenden Anspruch,
bei der eine Arretierungseinrichtung (4) zum Arretieren der zweiten Anzeigeeinrichtung (2) in einer gewünschten Betrachtungs- und/oder Lagerstellung an dieser angeordnet ist.

13. Präsentationsvorrichtung nach einem vorstehenden Anspruch,
mit einer Anschlußeinrichtung für zumindest ein Zeigergerät und/oder eine Tastatur für die zweite Anzeigeeinrichtung (2).

14. Präsentationsvorrichtung nach einem vorstehenden Anspruch,
mit einer Steuereinrichtung zum Verarbeiten unterschiedlicher Informationen für die verschiedenen Anzeigeeinrichtungen (1, 2).

15. Präsentationsvorrichtung nach einem vorstehenden Anspruch,
mit zumindest einem berührungssensitiven Bildschirm als Anzeigeeinrichtung (1, 2).
